# EUROPEAN PATENT APPLICATION

(11) **EP 4 790 286 A1**
(43) Date of publication of application: **12.08.2026**
(21) Application number: 25224382.9
(22) Date of filing: 17.12.2025
(51) Int. Cl.: F16K 27/00, F16K 31/04, F16K 31/524, F16K 31/53, B60K 15/035

(54) **MECHANICAL ACTUATION SYSTEM FOR IN-LINE SELECTOR VALVES E RELATED IN-LINE SELECTOR VALVE**

(30) Priority: 18.12.2024 IT 202400028884
(71) Applicant: ELBI International S.p.A., 10129 Torino (IT)
(72) Inventor: BARALE, Emanuele, 12100 CUNEO (IT); VERUTTI, Mattia, 12020 ROCCABRUNA (CN) (IT); MOLLO, Marta, 12023 CARAGLIO (CN) (IT)
(74) Representative: Boario, Enrico

(57) **Abstract**

Mechanical actuation system (2) for in-line selector valves (1), comprising: a rotary actuator (3); a first camshaft (5), rotatably driven by the rotary actuator (3), comprising one or more cams (52) adapted to move one or more selectors (12) comprised in the selector valve (1); a second camshaft (6) rotatably driven by the first camshaft (5) through two gears (50, 60) fitted to said camshafts (5, 6), the latter being mutually synchronous, and comprising one or more cams (62) adapted to move the selectors (12) comprised in the selector valve (1); a plurality of sliders (7) adapted to mechanically act upon the selectors (12) according to the action exerted by the camshafts (5, 6) through their respective cams (52, 62). The first camshaft (5) and the second camshaft (6) are parallel to each other and stacked along a first axis (Z). Each slider (7) comprises a follower (72) so designed that its upward movement occurs upon contact with a cam (62, 52) of a rotating camshaft (6, 5); while its downward movement occurs upon contact with another cam (52, 62) of another rotating camshaft (5, 6). The camshafts (5, 6) are so designed that, for each follower (72) of each slider (7), the cams (52, 62) are so shaped as to provide continuous contact between said follower (72) and one cam (52, 62) at all times during the rotation of said camshafts (5, 6).

## Description

The present invention relates to a mechanical actuation system for in-line selector valves.

The present invention also concerns an in-line selector valve.

Mechanical actuation systems are known in the art which are intended for selector valves whose selectors, in particular shutters, are moved by means of a mechanical drive system, as opposed to through the use of solenoid valves.

Mechanical actuation systems are known which are intended for valves with selectors arranged in line, wherein a single mechanical actuation system can control multiple selectors.

Mechanical actuation systems are known which comprise a camshaft with cams adapted to act upon a slider to impart a known motion to it, e.g. for selectively closing a valve.

In the field of household appliances, there is an ever-increasing demand for precise and reliable mechanical actuation systems capable of operating in adverse conditions, e.g. in the presence of a strong backpressure and/or water hammers.

Furthermore, in the field of household appliances there is an ever-increasing demand for mechanical actuation systems capable of keeping said selectors in a specific operating configuration even when a supply outage, in particular a power outage, occurs.

The need is also increasingly felt for reducing production costs while maintaining high levels of safety and reliability.

In addition, in the industry there is also an ever-increasing demand for selectors capable of withstanding strong backpressures and/or water hammers to guarantee a high level of safety.

In particular, no mechanical actuation system for in-line selector valves is currently known which can preserve the selectors' state when a power outage occurs or in the event of a considerable power reduction, and which can withstand water hammers and still provide proper selector operation, while at the same time ensuring high degrees of accuracy and reliability and keeping costs low.

The present invention aims at solving the above-mentioned technical problems by providing a mechanical actuation system for in-line selector valves which comprises two camshafts adapted to ensure continuous contact with the followers of the sliders associated with the selectors at all times during the rotation of the camshafts.

One aspect of the present invention relates to a mechanical actuation system for in-line selector valves, which has the features set out in the appended claim 1.

A further aspect of the present invention relates to an in-line selector valve having the features set out in claim 11.

Auxiliary features of the system and valve are set out in the appended dependent claims.

The features and advantages of the system and valve will become clear and apparent in light of the following description of some illustrative and non-limiting embodiments thereof, as well as from the accompanying drawings, wherein:
- Figure 1 shows, in a sectional axonometric view along a vertical plane, one possible, but merely illustrative and non-limiting, embodiment of an in-line selector valve comprising one possible embodiment of the mechanical actuation system according to the present invention;
- Figure 2 shows another axonometric view of one possible embodiment of the mechanical actuation system according to the present invention;
- Figures 3A and 3B show a detail of the mechanical actuation system, concerning the action exerted by the cams of the two camshafts on the follower of a slider; wherein Figure 3A shows the action exerted by a first cam in order to actuate a downward movement of said slider, so as to switch, e.g. close, a respective valve associated therewith; whereas Figure 3B shows the action exerted by a second cam in order to actuate an upward movement of said slider, so as to switch, e.g. open, a respective valve associated therewith;
- Figure 4 shows a side view of part of another possible embodiment of the mechanical actuation system according to the present invention.

With reference to the above-listed figures, reference numeral 2 designates the mechanical actuation system as a whole and as such. Whereas reference numeral 1 designates a selector valve as a whole and as such.

Mechanical actuation system 2 according to the present invention is adapted for application to selector valves 1, wherein such valves comprise selectors 12 arranged in line.

Said mechanical actuation system 2 comprises a rotary actuator 3; a first camshaft 5, rotatably driven by said rotary actuator 3.

Said first camshaft 5 comprises one or more cams 52, which are adapted to allow the movement of one or more selectors 12 comprised in a selector valve 1.

Mechanical actuation system 2 according to the present invention further comprises a second camshaft 6. Said second camshaft 6 is rotatably driven by said first camshaft 5 through two gears (50, 60) fitted to said camshafts (5, 6). Said first camshaft 5 and said second camshaft 6 are mutually synchronous.

Said second camshaft 6 comprises, in turn, one or more cams 62, preferably in a number equalling the number of cams 52 provided on said first camshaft 5. Said cams 62 comprised in said second camshaft 6 are adapted to allow the movement of one or more selectors 12 comprised in said selector valve 1.

Mechanical actuation system 2 according to the present invention further comprises a plurality of sliders 7. Said sliders 7 are adapted to mechanically act upon respective selectors 12 comprises in said selector valve 1 under the action exerted on them by said first camshaft 5 and said second camshaft 6 through their respective cams (52, 62).

In mechanical actuation system 2 according to the present invention, said first camshaft 5 and said second camshaft 6 are parallel to each other and stacked along a first axis "Z", being in particular disposed in mutual alignment at different heights along a first axis "Z".

Preferably, said first camshaft 5 and said second camshaft 6 are mutually counter-rotating.

In mechanical actuation system 2 according to the present invention, each slider 7 comprises a follower 72.

Said follower 72 being so designed that its upward movement occurs upon contact with a cam (62, 52) of a camshaft (6, 5) during the rotation of the latter; while its downward movement occurs upon contact with another cam (52, 62) of another camshaft (5, 6) during the rotation of the latter.

In mechanical actuation system 2 according to the present invention, said first camshaft 5 and said second camshaft 6 are so designed that, for each follower 72 of each slider 7, said cams (52, 62) are so shaped as to provide continuous contact between said follower 72 and one cam (52, 62) at all times during the rotation of said camshafts (5, 6).

Said mechanical actuation system 2, according to the present invention, ensures a precise and reliable actuation of selectors 12, being able to operate properly even in adverse conditions, such as, for example, in the presence of a strong backpressure and/or water hammers.

Mechanical actuation system 2, according to the present invention, can keep said selectors 12 in a specific operating configuration even in case of a power failure of said rotary actuator 3.

The present invention ensures lower production costs while maintaining high levels of safety and reliability.

In addition, mechanical actuation system 2 according to the present invention guarantees that selectors 12 can withstand strong backpressures and/or water hammers, thus ensuring a high degree of safety.

In a first possible embodiment, said follower 72 is interposed between said first camshaft 5 and said second camshaft 6. Said follower 72 is so designed that its upward movement, along said first axis "Z", occurs upon contact with the cam (62, 52) of the lower camshaft (6, 5) during the rotation of the latter; while its downward movement, along said first axis "Z", occurs upon contact with the cam (52, 62) of the upper camshaft (5, 6) during the rotation of the latter.

In another possible embodiment, said follower 72 is so shaped as to surround both said first camshaft 5 and said second camshaft 6. Said follower 72 is, therefore, so designed that its upward movement, along said first axis "Z", occurs upon contact with the cam (62, 52) of the upper camshaft (6, 5) during the rotation of the latter; while its downward movement, along said first axis "Z", occurs upon contact with the cam (52, 62) of the lower camshaft (5, 6) during the rotation of the latter.

In one possible embodiment of mechanical actuation system 2 according to the present invention, said mechanical actuation system 2 comprises a motion transmission system 4. Said motion transmission system 4 is adapted to transmit the motion generated by said rotary actuator 3 in order to rotatably drive said first camshaft 5.

In one possible, but merely illustrative and non-limiting, embodiment of mechanical actuation system 2 according to the present invention, said motion transmission system 4 comprises: an endless screw 41, keyed onto a shaft of said rotary actuator 3; and a driven gear 42, upon which said endless screw 41 acts.

In the present embodiment, said driven gear 42 is keyed onto said first camshaft 5.

In the present embodiment, the rotary actuator may be either a brushed electric motor or a brushless electric motor, and includes an encoder, e.g. a rotary encoder, for determining the position taken by said first camshaft 5 due to the motion generated by said rotary actuator 3 and transmitted through said motion transmission system 4.

In the embodiment comprising a motion transmission system 4 as described above, motion is transmitted from rotary actuator 3 to slider 7 through said endless screw 41, said driven gear 42, and camshafts (5, 6). Camshafts (5, 6) are made mutually synchronous by means of said two gears (50, 60), which are preferably straight-cut gears, keyed onto camshafts (5, 6).

In one possible embodiment, said slider 7, and particularly follower 72, is interposed between camshafts (5, 6), and its upward movement occurs upon contact with the cam (62, 52) of the lower camshaft (6, 5) during the rotation of the latter; while its downward movement occurs upon contact with the cam (52, 62) of the upper camshaft (5, 6) during the rotation of the latter.

In a second possible embodiment, said slider 7, and particularly follower 72, is so shaped as to surround both camshafts (5, 6), and its upward movement occurs upon contact with the cam (62, 52) of the upper camshaft (6, 5) during the rotation of the latter; while its downward movement occurs upon contact with the cam (52, 62) of the lower camshaft (5, 6) during the rotation of the latter.

Preferably, said endless screw 41 of motion transmission system 4 is disposed vertically, parallel to said first axis "Z". Said driven gear 42 is disposed with its axis of rotation parallel to a second axis "X", perpendicular to said first axis "Z". Therefore, said first camshaft 5 and said second camshaft 6 are both parallel to said second axis "X".

Preferably, said driven gear 42 has helical teeth adapted to mesh with said endless screw 41.

In another possible, but merely illustrative and non-limiting, embodiment of mechanical actuation system 2 according to the present invention, said motion transmission system 4 comprises a pinion 43 keyed onto a shaft of said rotary actuator 3. Said pinion 43 acts upon said gear 50 of said first camshaft 5. In the present embodiment, motion transmission system 4 drives gear 50 of said first camshaft 5, which in turn drives gear 60 of said second camshaft 6 to transmit the motion thereto. Said two camshafts (5, 6) are, therefore, mutually synchronous. This embodiment makes for a considerable reduction in production costs.

In the present embodiment, said rotary actuator 3 is a stepper electric motor. This solution further reduces the production costs incurred for manufacturing mechanical actuation system 2, since no encoder is necessary for determining the position of said cams (52, 62) as they rotate. In an alternative embodiment, said rotary actuator 3 is a brushless electric motor comprising a rotary encoder, in particular incorporated into said brushless electric motor.

In another possible alternative embodiment, said mechanical actuation system 2 according to the present invention is so designed that said first camshaft 5 is keyed directly onto a shaft of said rotary actuator 3. The present embodiment eliminates said motion transmission system 4, since said first camshaft 5 is directly connected to the shaft of said rotary actuator 3.

In this embodiment as well, said rotary actuator 3 is a stepper electric motor. In an alternative embodiment, said rotary actuator 3 is a brushless electric motor comprising an integrated rotary encoder.

In one possible embodiment of mechanical actuation system 2 according to the present invention, said two gears (50, 60), comprised in said first camshaft 5 and said second camshaft 6, are straight-cut gears. Said gears (50, 60) are keyed onto camshafts (5, 6).

The present embodiment ensures optimal torque transmission from first camshaft 5 to second camshaft 6, while simplifying the construction of said gears (50, 60).

Generally, said gears (50, 60) are installed at one end of the respective camshafts (5, 6). In a first possible embodiment, said gear 50 keyed onto said first camshaft 5 is fitted to that end of said first camshaft 5 which is opposite the end where the motion of said rotary actuator 3 is transmitted to said first camshaft 5. The present embodiment is particularly useful when said motion transmission system 4 comprises an endless screw 41 and a driven gear 42.

In the embodiment wherein said motion transmission system 4 comprises a pinion 43, said gear 50 is fitted to the same end of said first camshaft 5 that receives the motion from said rotary actuator 3.

In one possible embodiment of mechanical actuation system 2 according to the present invention, said first camshaft 5 is stacked over said second camshaft 6 along said first axis "Z". Advantageously, said first camshaft 5 and said second camshaft 6 are so designed that, for each follower 72 of each slider 7, said cams (52, 62) are so shaped as to provide continuous contact between said follower 72 and one cam (52, 62) at all times during the rotation of said camshafts (5, 6).

The present embodiment is particularly useful when said motion transmission system 4 comprises an endless screw 41 and a driven gear 42, or when said first camshaft 5 is keyed onto the shaft of said rotary actuator 3.

In another possible embodiment of mechanical actuation system 2 according to the present invention, said first camshaft 5 is disposed under said second camshaft 6 along said first axis "Z".

In this embodiment as well, said first camshaft 5 and said second camshaft 6 are advantageously so designed that said cams (52, 62) are so shaped as to provide continuous contact between said follower 72 and one cam (52, 62) at all times during the rotation of said camshafts (5, 6).

The present embodiment is particularly useful when said motion transmission system 4 comprises a pinion 43 acting upon gear 50 of first camshaft 5, or when said first camshaft 5 is keyed onto the shaft of said rotary actuator 3.

Generally, depending on the structural characteristics of said follower 72, e.g. its position relative to said camshafts (5, 6), and on the characteristics of selectors 12, and particularly on the type of valve implemented, the upward or downward movement of the sliders 7 actuated by the two camshafts (5, 6) may either open or close the valve associated with the respective selector 12. This aspect will not be described any further, since all possible embodiments can be easily inferred by a person skilled in the art.

In one possible embodiment of said slider 7, at a first end of said slider 7 there is said follower 72, while at the opposite end there is a connection portion 74 adapted to provide a mechanical connection between slider 7 and the respective selector 12.

Preferably, said follower 72 is disposed at a higher level, along said first axis "Z", than said connection portion 74 of said slider 7.

Preferably, said connection portion 74 is adapted to be connected to an shutter 121 of a respective selector 12.

In one possible embodiment, said follower 72 comprises a convex surface adapted to slide along cams (52, 62) of both camshafts (5, 6) during the rotation of the latter. By way of example, said follower 72 comprises a cylindrical convex surface, even more preferably a hollow cylindrical convex surface. In the present embodiment, said follower 72 is interposed between the two camshafts (5, 6) and, said slider 7 extending parallel to said first axis "Z", said convex surface of said follower 72 is connected to said connection portion 74 through at least one pair of arms, between which a camshaft (6, 5) is positioned, in particular that camshaft (6, 5) which lies lower with reference to said first axis "Z".

The shapes of said convex portion and said arms of follower 72 are such as to allow the rotation of lower camshaft (6, 5) along said first axis "Z" without said arms interfering with camshaft (6, 5) or with the cams thereof (62, 52), even as said slider 7 moves under the action of said cams (62, 52).

In another possible embodiment, said follower 72 comprises a concave surface, preferably adapted to enclose the cams (52, 62) of both camshafts (5, 6). In the present embodiment, the cams (52, 62) of both camshafts (5, 6) slide on the concave surface, in particular the inner surface, of said follower 72 during the rotation of said camshafts (5, 6). By way of example, said follower 72 comprises a hollow cylindrical concave surface, within which said camshafts (5, 6) are arranged. In the present embodiment, said slider 7 extends parallel to said first axis "Z", and said concave surface of said follower 72 is connected to said connection portion 74.

The shape of said concave portion of follower 72 is such as to allow the rotation of both camshafts (6, 5) without interfering with camshafts (6, 5) or with the cams thereof (62, 52), even as said slider 7 moves under the action of said cams (62, 52).

Preferably, said mechanical actuation system 2 according to the present invention is so designed that each cam 52 of said first camshaft 5 is configured to keep said valve associated with that selector 12 in an operating configuration, e.g. closed or open, when said cam 52 is acting upon said follower 72 of said slider 7, even in case of a power failure of said rotary actuator 3.

In fact, the shape of said cam 52 of the camshaft contributes to maintaining the current state, i.e. closed or open, of selector 12 when no power is being supplied to said rotary actuator, even in the presence of simultaneous backpressures and/or water hammers.

In one possible embodiment, each cam (52, 62) comprises a circular section, which is a part of the base circle or primitive diameter of cam (52, 62), where cam (52, 62) does not act upon said follower 72 of slider 7; a connecting ramp, the function of which is to absorb the shocks between cam (52, 62) itself and follower 72, which would otherwise occur because of the clearance between them; flanks of cam (52, 62), which define cam sections determining the motion law of follower 72, and hence of slider 7. In addition, each cam (52, 62) comprises a head, representing the cam top, where the maximum travel of follower 72, and hence of slider 7, is reached, which head has preferably a constant height.

Advantageously, the ramps and flanks of cams (52, 62) are designed to eliminate the lash and ensure a continuous action upon follower 72 by at least one cam (652, 62).

In light of the above, it is clear that the stroke of selectors 12 can be adjusted at will by modifying the shape of cams (52, 62), e.g. by changing the cam lift and/or primitive diameter.

In general, said cams (52, 62) associated with said camshafts (5, 6) and adapted to act upon one same slider 7 have, for each follower 72 of each slider 7, a profile that ensures constant contact between said follower 72 and one cam (52, 62) at all times during the rotation of said camshafts (5, 6).

The present invention allows the use of flat cams for driving said selectors 12 of an in-line selector valve 1.

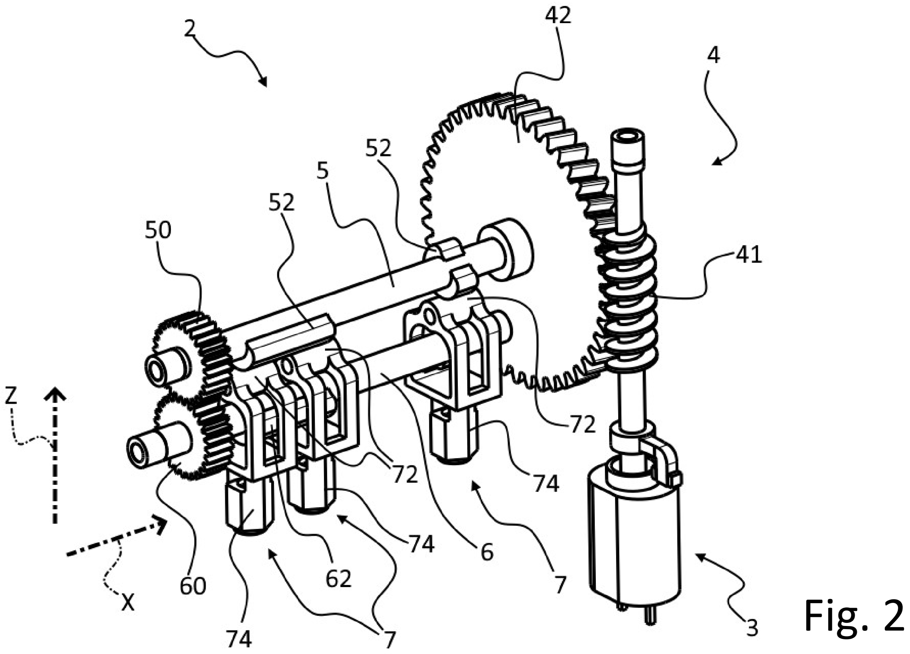

Describing now the construction details of one possible embodiment of mechanical actuation system 2 according to the present invention, Figure 2 shows an axonometric view of one possible embodiment of mechanical actuation system 2 according to the present invention comprising a motion transmission system 4.

Figure 2 shows a rotary actuator 3 in the form of a direct-current electric motor, to the shaft of which an endless screw 41 is fitted. Said endless screw 41 acts upon a driven gear 42, causing it to rotate. Driven gear 42 is, in turn, keyed onto an end of a first camshaft 5. Said first camshaft 5 comprises a plurality of cams 52, and the other end of said first camshaft 5, opposite the end where driven gear 42 is keyed, carries a gear 50 which is coupled with another gear 60 keyed onto a second camshaft 6, in particular at one end of said second camshaft 6. First camshaft 5 and second camshaft 6 are parallel to each other; in particular, said camshafts (5, 6) are both parallel to a second axis "X", but they lie aligned at different heights with reference to said first axis "Z". First camshaft 5 and second camshaft 6 are mutually counter-rotating.

Between said first camshaft 5 and second camshaft 6 there are a plurality of followers 72 of as many sliders 7, acted upon by respective cams (52, 62) of both camshafts (5, 6). Each slider 7 comprises also a connection portion 74 to connect said slider 7 to a selector of a selector valve (not shown).

In the embodiment illustrated in Figure 2, each follower 72 comprises a hollow cylindrical convex surface, which is connected to said connection portion 74 through two pairs of arms encompassing second camshaft 6.

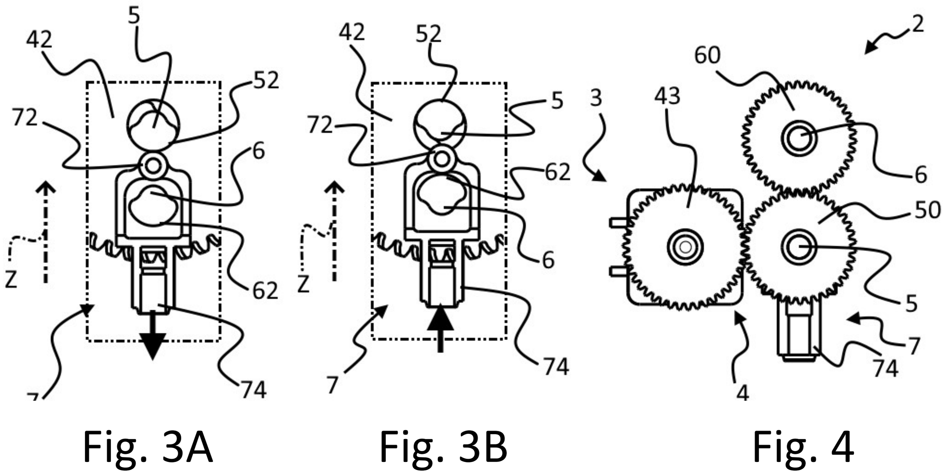

Figures 3A and 3B show some construction details of a preferred embodiment of mechanical actuation system 2, in particular concerning the action exerted by cams (52, 62) of both camshafts (5, 6) on a follower 72 of a slider 7.

In particular, Figure 3A shows the action exerted by a first cam 52 of first camshaft 5 in order to actuate a downward movement of said slider 7, so as to switch, e.g. close, a valve associated therewith.

In Figure 3A one can see that cam 52 of first camshaft 5 is pushing down follower 72 of slider 7 along said axis "Z".

In the embodiment illustrated in Figure 3A, follower 72 comprises a hollow cylindrical convex surface, located between the two camshafts (5, 6), and said convex surface is connected to said connection portion 74 through a pair of arms encompassing second camshaft 6.

In the configuration of cams (52, 62) shown in Figure 3A, cam 62 of second camshaft 6 is not interacting with follower 72 of slider 7. In this configuration, connection portion 74, to which a selector (not shown) is connected, is at the lowest point of the possible travel of slider 7 along said first axis "Z". Behind camshafts (5, 6) and slider 7, driven gear 42 is visible.

Figure 3B shows the action exerted by a second cam 62 of second camshaft 6 in order to actuate an upward movement of said slider 7, so as to switch, e.g. open, a valve associated therewith.

In Figure 3B one can see that cam 62 of second camshaft 6 is pushing up follower 72 of slider 7 along said first axis "Z". In the configuration of cams (52, 62) shown in Figure 3B, cam 52 of first camshaft 5 is not interacting with follower 72 of slider 7. In this configuration, connection portion 74, to which a selector (not shown) is connected, is at the highest point of the possible travel of slider 7 along said first axis "Z".

Figure 4 shows, in a side view, part of another possible embodiment of mechanical actuation system 2 according to the present invention. In Figure 4, the two gears (50, 60) are visible, which are keyed onto respective camshafts (5, 6). In the present embodiment, said first camshaft 5 lies under said second camshaft 6, with reference to said first axis "Z". In the embodiment shown in Figure 4, said motion transmission system 4 comprises a pinion 43 keyed onto a shaft of said rotary actuator 3, consisting of an electric motor.

Said pinion 43 rotatably drives gear 50 of said first camshaft 5. The rotation of said gear 50 of said first camshaft 5 produces a rotation of gear 60 of said second camshaft 6.

A further aspect of the present invention concerns a selector valve 1 comprising a mechanical actuation system 2 according to the present invention.

Said selector valve 1 according to the present invention comprises a plurality of selectors 12 arranged in line, parallel to a second axis "X".

Each selector 12 comprises a valve body 121 and an shutter 122, arranged in said valve body 121 and adapted to selectively allow a fluid to flow into the respective valve body 121.

In selector valve 1 according to the present invention, said plurality of selectors 12 are driven by a mechanical actuation system 2 according to the present invention.

In general, said valve body 121 comprises: an inlet, whereat a fluid arrives; an outlet, through which said fluid can exit; and an intermediate portion connecting said inlet and said outlet. Said shutter 122 is located in said intermediate portion, within a suitable housing, and is movable. Said shutter 122 is connected to a slider 7 of said mechanical actuation system 2 according to the present invention through said connection portion 74.

In one possible embodiment, said shutter 122 comprises a protrusion adapted to fit into said connection portion 74, e.g. by shape coupling, thus establishing a mechanical connection.

Generally, said selector valve 1 is adapted for installation in a hydraulic circuit "P" for the circulation of a fluid.

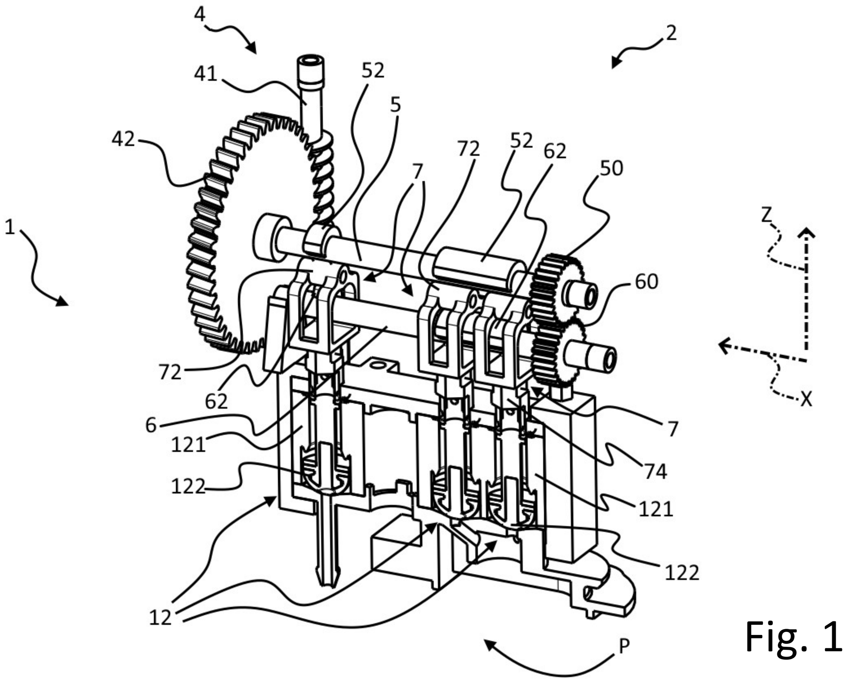

Describing now the construction details of one possible embodiment of a selector valve 1 according to the present invention, Figure 1 shows, in a sectional axonometric view along a vertical plane, one possible, but merely illustrative and non-limiting, embodiment of a selector valve 1 wherein selectors 12 are arranged in line, parallel to said second axis "X". Selector valve 1 shown in Figure 1 comprises one possible embodiment of mechanical actuation system 2 according to the present invention.

In Figure 1 a mechanical actuation system 2 is visible which corresponds to the embodiment that includes a motion transmission system 4 comprising an endless screw 41 and a driven gear 42.

Figure 1 shows first camshaft 5, onto which said driven gear 42 is keyed. Said first camshaft 5 comprises two cams 52.

Underneath said first camshaft 5 there is said second camshaft 6, which has the same number of cams 62. The two camshafts are made mutually synchronous by two gears (50, 60) keyed onto respective camshafts (5, 6).

Between said camshafts (5, 6) there are three sliders 7, wherein a first slider 7 is actuated by a first pair of cams (52, 62) of camshafts (5, 6), while the other two sliders 7 are actuated by a single pair of cams (52, 62) of camshafts (5, 6).

An shutter 122, housed in a corresponding valve body 121 of a respective selector 12, is connected to each slider 7 through a respective connection portion 74.

Each slider 7 comprises a follower 72, in turn comprising a hollow cylindrical convex surface located between the two camshafts (5, 6), and the same convex surface is connected to said connection portion 74 through a pair of arms encompassing second camshaft 6.

In the present embodiment, said first camshaft 5 is adapted to actuate said downward movement of said plurality of sliders 7, so as to close the respective valves associated with selectors 12. On the contrary, said second camshaft 6 is adapted to actuate said upward movement of said plurality of sliders 7, so as to open the respective valves associated with selectors 12.

Selector valve 1 shown in Figure 1 is adapted for installation in a hydraulic circuit "P" for the circulation of a fluid, e.g. in a household appliance.

In general, mechanical actuation system 2 according to the present invention makes it possible to move sliders 7 through a pair of camshafts (5, 6) while ensuring continuous contact between follower 72 of slider 7 and the cams (52, 62) of the two camshafts (5, 6), thus avoiding the creation of a gap between said follower 72 of slider 7 and at least one of the two cams (52, 62) of the two camshafts (5, 6). The present solution guarantees the utmost reliability, in that selector 12 can work properly in any operating condition. As a matter of fact, mechanical actuation system 2 according to the present invention allows selector 12 to operate with high flow rates and/or high pressures. Indeed, the transmission of motion from rotary actuator 3 to slider 7 allows selector 12 to operate correctly and handle high pressures, e.g. up to 16 bar, even if the torque produced by rotary actuator 3 is very low, e.g. when an electric motor producing a torque of approx. 10 Nmm is used.

Therefore, the present invention makes it possible to keep the configuration taken by selectors 12 unchanged in the event of a power outage suffered by said rotary actuator 3, even in the presence of a strong backpressure and/or water hammers.

With the present invention, said camshafts (5, 6) can be designed to drive a large number of selectors 12, since very low-power rotary actuators 3 can be used. As a matter of fact, mechanical actuation system 2 according to the present invention can drive a very large number of in-line selectors 12 by means of just two camshafts (5, 6).

The stroke of selectors 12 can be varied as necessary. In fact, the stroke of each individual selector 12 can be adapted by changing the lift of the cams (52, 62) coupled to that selector 12 through the respective slider 7, and also by changing the cams' primitive diameter and the conformation of said follower 72 of slider 7.

Mechanical actuation system 2 according to the present invention makes it possible to maintain the configuration taken by said selector 12 when said rotary actuator 3 suffers a power outage or when the power supply is insufficient to drive the shaft of said rotary actuator 3, or at least to prevent it from rotating.

Other alternative embodiments, which have not been described or illustrated in the present patent application, but which can be easily inferred by a person skilled in the art in light of the contents of the present patent application, should be considered to fall within the protection scope of the present invention.

**REFERENCE NUMERALS**

| | |
|---|---|
| Selector valves | 1 |
| Selectors | 12 |
| Valve body | 121 |
| Shutter | 122 |
| Mechanical actuation system | 2 |
| Rotary actuator | 3 |
| Motion transmission system | 4 |
| Endless screw | 41 |
| Driven gear | 42 |
| Pinion | 43 |
| First camshaft | 5 |
| Gear | 50 |
| Cam | 52 |
| Second camshaft | 6 |
| Gear | 60 |
| Cam | 62 |
| Sliders | 7 |
| Follower | 72 |
| Connection portion | 74 |
| Hydraulic circuit | "P" |
| First axis | "Z" |
| Second axis | "X" |

## Claims

1. Mechanical actuation system (2) for in-line selector valves (1), comprising:
- a rotary actuator (3);
- a first camshaft (5), rotatably driven by said rotary actuator (3), comprising one or more cams (52) adapted to move one or more selectors (12) comprised in a selector valve (1);
- a second camshaft (6) rotatably driven by said first camshaft (5) through two gears (50, 60) fitted to said camshafts (5, 6), the latter being mutually synchronous, and comprising one or more cams (62) adapted to allow the movement of one or more selectors (12) comprised in said selector valve (1);
- a plurality of sliders (7) adapted to mechanically act upon respective selectors (12), comprised in said selector valve (1), when acted upon by said first camshaft (5) and said second camshaft (6) through their respective cams (52, 62);
said first camshaft (5) and said second camshaft (6) being parallel to each other and stacked along a first axis (Z); each slider (7) comprising a follower (72) so designed that its upward movement occurs upon contact with a cam (62, 52) of a camshaft (6, 5) during the rotation of the latter; while its downward movement occurs upon contact with another cam (52, 62) of another camshaft (5, 6) during the rotation of the latter;
said first camshaft (5) and said second camshaft (6) being so designed that, for each follower (72) of each slider (7), said cams (52, 62) are so shaped as to provide continuous contact between said follower (72) and one cam (52, 62) at all times during the rotation of said camshafts (5, 6).

2. Mechanical actuation system (2) according to claim 1, comprising a motion transmission system (4) adapted to transmit the motion generated by said rotary actuator (3) in order to rotatably drive said first camshaft (5).

3. Mechanical actuation system (2) according to claim 2, wherein said motion transmission system (4) comprises:
- an endless screw (41), keyed onto a shaft of said rotary actuator (3); and
- a driven gear (42), upon which said endless screw (41) acts;
said driven gear (42) being keyed onto said first camshaft (5).

4. Mechanical actuation system (2) according to claim 2, wherein said motion transmission system (4) comprises a pinion (43) keyed onto a shaft of said rotary actuator (3); said pinion (43) acting upon the gear (50) of said first camshaft (5).

5. Mechanical actuation system (2) according to claim 1, wherein said first camshaft (5) is keyed onto a shaft of said rotary actuator (3).

6. Mechanical actuation system (2) according to claim 4 or 5, wherein said rotary actuator (3) is a stepper electric motor or a brushless electric motor comprising a rotary encoder.

7. Mechanical actuation system (2) according to one of the preceding claims, wherein said two gears (50, 60), comprised in said first camshaft (5) and said second camshaft (6), are straight-cut gears keyed onto the camshafts (5, 6).

8. Mechanical actuation system (2) according to one of the preceding claims, wherein said follower (72) is interposed between said first camshaft (5) and said second camshaft (6), and is so designed that its upward movement, along said first axis (Z), occurs upon contact with the cam (62, 52) of the lower camshaft (6, 5) during the rotation of the latter; while its downward movement, along said first axis (Z), occurs upon contact with the cam (52, 62) of the upper camshaft (5, 6) during the rotation of the latter.

9. Mechanical actuation system (2) according to one of the preceding claims from 1 to 7, wherein said follower (72) is so shaped as to surround both said first camshaft (5) and said second camshaft (6), and is so designed that its upward movement, along said first axis (Z), occurs upon contact with the cam (62, 52) of the upper camshaft (6, 5) during the rotation of the latter; while its downward movement, along said first axis (Z), occurs upon contact with the cam (52, 62) of the lower camshaft (5, 6) during the rotation of the latter.

10. Mechanical actuation system (2) according to one of the preceding claims, wherein each cam (52) of said first camshaft (5) is configured to keep said respective valve associated with said selector (12) in an operating configuration, i.e. either closed or open, when said cam (52) is acting upon said follower (72) of said slider (7), even in case of a power failure of said rotary actuator (3).

11. Selector valve (1) comprising a plurality of selectors (12) arranged in line, parallel to a second axis (X), wherein each selector (12) comprises:
- a valve body (121);
- an shutter (122), arranged in said valve body (121), adapted to selectively allow a fluid to flow into the respective valve body (121);
said plurality of selectors (12) being actuated by a mechanical actuation system (2) according to the preceding claims.
